# EUROPÄISCHE PATENTSCHRIFT

(11) **EP 3 586 595 B1**
(45) Veröffentlichungstag und Bekanntmachung des Hinweises auf die Patenterteilung: **09.06.2021**
(21) Anmeldenummer: 19167720.2
(22) Anmeldetag: 08.04.2019
(51) Int. Cl.: A01D 41/12, A01D 75/00, F01P 11/10, F01P 11/12

(54) **KÜHLERKORB MIT EINER REINIGUNGSVORRICHTUNG**
COOLER BASKET WITH CLEANING DEVICE
TAMIS ROTATIF DOTÉ D'UN DISPOSITIF DE NETTOYAGE

(30) Priorität: 21.06.2018 DE 102018114967
(43) Veröffentlichungstag der Anmeldung: 01.01.2020
(73) Patentinhaber: CLAAS Selbstfahrende Erntemaschinen GmbH, 33428 Harsewinkel (DE)
(72) Erfinder: Alterbaum, Andreas, 49186 Bad Iburg (DE)
(74) Vertreter: CLAAS Gruppe

(56) Entgegenhaltungen:
- EP-A1- 0 079 399
- EP-A1- 2 546 492
- EP-A2- 2 754 873
- US-A- 5 217 512
- US-B1- 8 062 109

## Beschreibung

Die vorliegende Erfindung betrifft einen Kühlerkorb mit einer Reinigungsvorrichtung gemäß dem Oberbegriff des Anspruches 1. Weiterhin betrifft die Erfindung eine Erntemaschine gemäß dem Oberbegriff des Anspruches 10.

Der Antrieb von selbstfahrenden Erntemaschinen erfolgt über eine Brennkraftmaschine, die vorzugsweise in deren Heckbereich angeordnet und von Verkleidungsteilen umgeben ist. Üblicherweise handelt es sich um eine wassergekühlte Brennkraftmaschine mit einem als Radiator ausgebildeten Wärmetauscher, welcher zum einen von Kühlwasser aus einem Kühlkreislauf der Brennkraftmaschine und zum anderen von der die Erntemaschine umgebenden Luft durchströmt wird. Weiterhin können innerhalb dieser Verkleidung der selbstfahrenden Erntemaschine auch Ölkühler für ein Hydrauliksystem der Erntemaschine, Ladeluftkühler, weitere Aggregate usw. angeordnet sein. Darüber hinaus kann auch die für den Verbrennungsprozess der Brennkraftmaschine über einen Abgasturbolader angesaugte Luft, die zuvor über einen Luftfilter gereinigt wird, innerhalb dieses durch Verkleidungsteile abgedeckten Bereiches angesaugt werden. Dabei muss selbstverständlich für die Kühlung des entsprechenden Wärmetauschers und auch für den Verbrennungsprozess stets eine ausreichende Luftmenge zur Verfügung stehen, die von einer Kühlvorrichtung mit einer Ansaugvorrichtung durch einen Kühlerkorb angesaugt wird.

Während eines Erntevorganges ist aber die die Erntemaschine umgebende Luft stark verunreinigt, wobei diese Verunreinigungen bei der Getreide- oder Rapsernte einen hohen Staubanteil, Anteile von Kurzstroh usw. aufweisen. Wird der selbstfahrende Mähdrescher zur Ernte von Mais eingesetzt, so kann es sich bei den Verunreinigungen der Luft zum Teil auch um Lieschblätter handeln, die die geernteten Maiskolben umschließen. Bei selbstfahrenden Feldhäckslern treten Verunreinigungen der Luft auf, bei denen es sich um Halmbestandteilen des Häckselgutes und, sofern der selbstfahrende Feldhäcksler zur Ernte von Silomais eingesetzt wird, ebenfalls um komplette Lieschblätter oder deren Bestandteilen handeln kann. Aufgrund der Anordnung der Brennkraftmaschine im Heckbereich der Erntemaschine können bei einem selbstfahrenden Mähdrescher die im Bereich der Siebe und eines Anbauhäckslers auftretenden Verunreinigungen der Luft besonders massiv die von einer Kühlluftreinigungsvorrichtung der Brennkraftmaschine und von sonstigen Kühlaggregaten angesaugte Luft verunreinigen.

Daher ist ein Kühlerkorb mit einer Reinigungsvorrichtung vorgesehen, wobei der Kühlerkorb ein Rahmenbauteil aufweist, innerhalb dessen eine siebartige Oberfläche ausgebildet ist, und die Reinigungsvorrichtung als eine sich zyklisch über die Oberfläche des Kühlerkorbes bewegende Absaugvorrichtung ausgebildet ist, welche sich auf der Oberfläche ablagernde Partikel aufnimmt.

Die gattungsgemäße EP 2 754 873 A2 beschreibt einen Kühlerkorb mit einer Reinigungsvorrichtung, bei welcher eine Reinigung der Gitterfläche eines ortfesten Kühlerkorbes dadurch erreicht wird, dass eine Absaugvorrichtung, die eine Absaugdüse und ein Abschirmelementumfasst, in einer linearen Bewegung zyklisch über die Gitterfläche geführt wird. Hierzu ist an beiden Seiten der feststehenden Gitterfläche eine Führung der Absaugdüse sowie eines gegenüberliegend, unterhalb der Gitterfläche, angeordneten Abschirmelementes vorgesehen. Ein außenseitig angeordneter Linearantrieb bewegt die Absaugdüse und das Abschirmelement gemeinsam entlang der Gitterfläche hin und her. Das Abschirmelement ist dabei endseitig durch schmale Stege mit der Absaugdüse verbunden. Diese Stege erfordern jedoch für das lineare Verfahren der Absaugdüse Schlitze, die den hinter der Gitterfläche liegenden Reinraumbereich partiell zum Schmutzbereich nach außen öffnen. Diese Schlitze werden durch Bürstenleisten abgedichtet werden, durch die jedoch die Stege immer wieder hindurchgleiten. An der Absaugdüse ist mittig ein sich vertikal zur Absaugdüse erstreckender Stutzen vorgesehen, an dem ein Absaugkanal angeschlossen ist, welcher mit einem Sauggebläse verbunden ist, welches seinerseits in eine Abscheidevorrichtung einmündet. Dabei besteht bei einem verstärkten Aufkommen von Mais-Lieschenblättern die Problematik, dass das Sauggebläse ab einer gewissen Belastung nicht mehr in der Lage ist, die Lieschenblätter abzusaugen. Der Gutaustritt aus der Absaugdüse in den Absaugkanal erfolgt in der Mitte. Dadurch müssen die Volumenströme von beiden Seiten der Absaugdüse zusammengeführt werden. Zusätzlich ist hier eine scharfkantige 90°-Umlenkung des abgesaugten Gutstromes in dem Absaugkanal vorgesehen. Deshalb treten im Bereich der Umlenkung des Absaugkanals die ersten Ablagerungen von Lieschenblättern auf, wodurch der Absaugvolumenstrom gedrosselt wird und das Risiko von weiteren Lieschenblattablagerungen steigt. Nach und nach verstopft so die Absaugdüse und die Absaugung auf der Oberfläche des Kühlerkorbes kommt zum Erliegen. Die Oberfläche des Kühlerkorbes setzt sich vollständig mit Lieschenblättern zu. Der Kunde muss zumindest den Absaugkanal sowie die Oberfläche des Kühlerkorbes manuell reinigen.

Somit liegt der vorliegenden Erfindung die Aufgabe zugrunde, einen Kühlerkorb mit einer Reinigungsvorrichtung der eingangs genannten Art sowie eine selbstfahrende Erntemaschine weiterzubilden, welche die aus dem Standes der Technik bekannten Nachteile vermeidet, insbesondere die Problematik eines Gutstaues in luftführenden Komponenten der Reinigungsvorrichtung.

Diese Aufgabe wird durch einen Kühlerkorb gemäß den Merkmalen des unabhängigen Anspruches 1 gelöst. Weiterhin wird diese Aufgabe durch eine selbstfahrende Erntemaschine gemäß dem Anspruch 10 gelöst.

Vorteilhafte Weiterbildungen sind Gegenstand der Unteransprüche.

Gemäß dem Anspruch 1 wird ein Kühlerkorb mit einer Reinigungsvorrichtung vorgeschlagen, wobei der Kühlerkorb ein Rahmenbauteil aufweist, innerhalb dessen eine siebartige Oberfläche ausgebildet ist, und die Reinigungsvorrichtung eine sich zyklisch über die Oberfläche des Kühlerkorbes bewegende Absaugvorrichtung umfasst, welche sich auf der Oberfläche ablagernde Partikel aufnimmt. Um die Gefahr eines Gutstaues in luftführenden Komponenten der Reinigungsvorrichtung zu vermeiden oder zumindest zu minimieren, ist erfindungsgemäß vorgesehen, dass die Absaugvorrichtung zwei über die Oberfläche bewegbare Absaugarme aufweist, die jeweils eine Absaugdüse mit einem länglichen Eintrittsbereich, welcher der Oberfläche zugewandt ist, und einen der Oberfläche abgewandten zylindrischen Austrittsbereich aufweisen, der an einem Ende des jeweiligen Absaugarmes angeordnet ist, wobei an dem jeweiligen Austrittsbereich ein Absaugkanal angeschlossen ist, welche im Bereich eines gemeinsamen Absauggebläses in ein das Absauggebläse aufnehmendes Gehäuse münden. Durch das Vorsehen zweier mit Absaugdüsen versehener Absaugarme, die über die Oberfläche des Kühlerkorbes bewegt werden, lässt sich die Verstopfungsanfälligkeit reduzieren und zugleich eine hohe Absaugleistung realisieren. Da hier zwei Absaugdüsen und nur ein Absauggebläse eingesetzt werden führt dies zu einer zwangsläufigen Zusammenführung von zwei Teilvolumenströmen, weshalb die Zusammenführung der Teilvolumenströme direkt vor den Läufer des Absauggebläses in den Entstehungspunkt des Unterdruckes gelegt ist. Das Risiko für Verstopfungen durch die Gutzusammenführung und eine unterschiedliche Unterdruckaufteilung auf die beiden Absaugkanäle wird hierdurch minimiert.

Bevorzugt können die beiden Absaugkanäle mit jeweils einem eine Querschnittsverjüngung aufweisenden Endabschnitt in das Gehäuse münden. Dabei kann das Querschnittsverhältnis der Absaugkanäle in diesem Bereich in Relation zur Länge des jeweiligen Absaugkanals stehen. Hierdurch kann ein nahezu gleichmäßiger Unterdruck in den beiden Absaugkanälen aufgebaut werden.

Insbesondere kann das Gehäuse in einer unterhalb des Kühlerkorbes liegenden Ebene angeordnet sein. Die Anordnung des Gehäuses respektive des darin angeordneten Absauggebläses in einer Ebene unterhalb des Kühlerkorbes hat den Vorteil, dass die Abscheidewirkung des Absauggebläses durch die Schwerkraft unterstützt wird. Zudem sind die mittels der Absaugkanäle zu überwindenden Strecken zwischen den Ansaugarmen und dem Absauggebläse kurz.

Des Weiteren können die Endabschnitte der Absaugkanäle an ihrer äußeren Umfangsfläche einen einzelnen flanschförmigen Anschluss ausbilden, der gegenüber einem korrespondierend ausgebildeten Anschlussabschnitt des Gehäuses positionierbar ist.

Um das Strömungsverhalten im Inneren der Absaugkanäle zu optimieren, sollten die Absaugkanäle innenseitig mit einer glatten Mantelfläche ausgeführt sein und einen von Knicken oder scharfen Kanten freien Verlauf zwischen dem jeweiligen Absaugarm und dem gemeinsamen Absauggebläse aufweisen.

Gemäß einer bevorzugten Weiterbildung können die Absaugarme jeweils um eine vertikal zu der Oberfläche orientierten Achse einer ortfesten Lagerstelle schwenkbar gelagert sein. Dabei können die Lagerstellen diagonal gegenüberliegend positioniert sein.

Insbesondere können die Lagerstellen innerhalb des Kühlerkorbes angeordnet sein. Durch die Anordnung der Lagerstellen innerhalb des Kühlerkorbes, insbesondere in dessen Außen oder Randbereichen, wird eine Vereinfachung der Abdichtung erreicht, da die innerhalb des Kühlerkorbes angeordneten Lagerstellen keine Relativbewegung zu diesem ausführen. Die ortsfest angeordneten Lagerstellen können eine Abdichtung aufweisen, mit der diese gegenüber des Kühlerkorbes abgedichtet sind. Aufgrund der fehlenden Relativbewegung zwischen den Lagerstellen und dem Kühlerkorb tritt zudem kein Verschleiß der Abdichtung auf. Insbesondere können die Lagerstellen innerhalb des Rahmenbauteils oder der siebartigen Oberflächen angeordnet sein. Zudem ist die Anordnung innerhalb des Kühlerkorbes bauraumsparend. Die jeweilige Lagerstelle kann eine Wälzlageranordnung sowie eine in dieser gelagerte Welle umfassen, an der der jeweilige Absaugarme drehfest angeordnet ist.

Dabei sollten die zylindrischen Austrittsbereiche im Wesentlichen koaxial zu der jeweiligen Achse angeordnet sein. Dadurch kann eine reine Drehbewegung des jeweiligen Absaugarmes um die Achse stattfinden.

Gemäß einer Weiterbildung der Erfindung können die Absaugkanäle an dem Rahmenbauteil befestigt sein. Durch die Anordnung der beiden Absaugkanäle an dem Rahmenbauteil kann eine von den Absaugdüsen statisch unabhängige Befestigung erreicht werden. Der Übergang zwischen dem jeweiligen sich drehenden Absaugarm und dem jeweils ortsfestem Absaugkanal muss deshalb keine statische, im Sinne von Kräfte aufnehmende Funktion, sondern lediglich eine abdichtende Funktion erfüllen. Diese Funktion kann beispielsweise durch eine einfache Gummimanschette realisiert werden, die über den Übergang geschoben wird.

Weiterhin wird die eingangs gestellte Aufgabe durch eine selbstfahrende Erntemaschine, insbesondere Mähdrescher oder Feldhäcksler, mit einem Verbrennungsmotor, wobei dem Verbrennungsmotor eine Kühlvorrichtung mit einem Kühlerkorb zugeordnet ist, der nach einem der vorangehenden Ansprüche ausgeführt ist

Hierbei können die Oberfläche des Kühlerkorbes und die Reinigungsvorrichtung an einem gemeinsamen Rahmenbauteil angeordnet sein, welches gegenüber der Kühlvorrichtung verschwenkbar an der Erntemaschine angeordnet ist. Hierdurch ist eine Zugänglichkeit zu der Kühlvorrichtung gegeben, um Wartungsarbeiten durchführen zu können.

Vorzugsweise kann das Gehäuse, welches das Absauggebläse aufnimmt, unterhalb des verschwenkbaren Rahmenbauteils des Kühlerkorbes ortsfest an der Erntemaschine angeordnet sein. Hierdurch wird die statische Anbindung des Absauggebläses vereinfacht. Ebenso lässt sich im Fall eines hydraulischen Antriebes des Absauggebläses eine hierfür erforderliche hydraulische Leitungsführung einfacher gestalten.

Dabei kann zwischen den Endabschnitte der Absaugkanäle und dem Anschlussabschnitt an dem Gehäuse eine Trennstelle ausgebildet sein. Um das Schwenken des Kühlkorbes und der Reinigungsvorrichtung bei feststehendem Gehäuse zu ermöglichen, kann das Gehäuse des Absauggebläses mit einer Schrägneigung zur Horizontalen angeordnet sein, so dass sich ein Gefälle einstellt. Die Endabschnitte der Absaugkanäle und der Anschlussabschnitt sind als schiefe Ebenen ausgebildet, so dass die Absaugkanäle wie auf einer Rampe auf den Anschlussabschnitt auflaufen und diesen mit Erreichen einer Endposition in Umfangsrichtung abdichten können. Die Trennstelle ermöglicht zudem die Beseitigung einer Verstopfung direkt am Absauggebläse.

Die Erntemaschine kann ein Hydrauliksystem zum Antreiben von Arbeitsaggregaten aufweisen. Insbesondere kann das Hydrauliksystem der Erntemaschine als Konstantdrucksystem ausgeführt sein, wobei zum Antreiben des zumindest einen Absaugarmes ein Hydraulikzylinder vorgesehen ist, der alternierend mit Druck beaufschlagbar ist. Die Ansteuerung des Hydraulikzylinders kann bevorzugt zeitgesteuert oder sensorgesteuert erfolgen. Durch das Ein- und Ausfahren des Hydraulikzylinders pendelt der eine Absaugarm um die Achse der Lagerstelle, an der dieser angelenkt ist. Mittels der Koppelstange wird diese Bewegung auf den diagonal gegenüberliegend gelagerten Absaugarm übertragen.

Alternativ das Hydrauliksystem mit einem konstanten Volumenstrom arbeitet, wobei zum Antreiben des zumindest einen Absaugarmes ein Hydraulikmotor vorgesehen ist. Der konstante Volumenstrom gewährleistet eine konstante Drehzahl des Hydraulikmotors und somit der mittels des Kurbeltriebs auf den Absaugarm übertragenen Schwenk- oder Pendelbewegung.

Die vorliegende Erfindung wird nachstehend anhand von in den Zeichnungen dargestellten Ausführungsbeispielen näher erläutert.

Es zeigen:
- Fig. 1: eine schematische Teilansicht einer landwirtschaftlichen Erntemaschine;
- Fig. 2: eine perspektivische Ansicht einer Kühlvorrichtung sowie eines Kühlerkorbes mit einer Reinigungsvorrichtung;
- Fig. 3: eine perspektivische Teilansicht eines unmittelbar angetriebenen Absaugarmes der Reinigungsvorrichtung gemäß Fig. 2;
- Fig. 4: eine perspektivische Teilansicht eines mittelbar angetriebenen Absaugarmes der Reinigungsvorrichtung gemäß Fig. 2;
- Fig. 5: eine Teilschnittansicht eines Absaugarmes des Kühlerkorbes gemäß Fig. 4;
- Fig. 6: eine Teilschnittansicht eines Gehäuses eines Absauggebläses der Reinigungsvorrichtung des Kühlerkorbes gemäß Fig. 2;
- Fig. 7: eine perspektivische Ansicht der Kühlvorrichtung und des Kühlerkorbes gemäß Fig. 2 in einer Wartungsposition;
- Fig. 8: eine perspektivische Ansicht des Kühlerkorbes gemäß einer zweiten Ausführungsform.

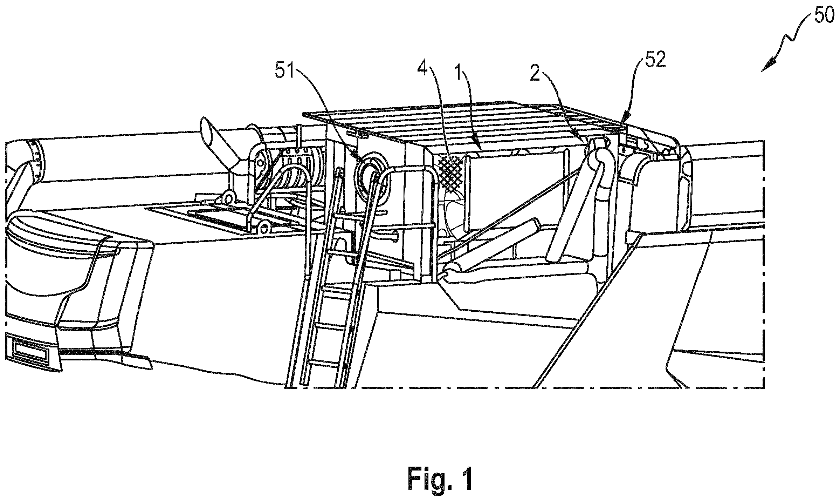

In Fig. 1 ist eine schematische Teilansicht einer selbstfahrenden Erntemaschine 50, die im dargestellten Ausführungsbeispiel als ein Mähdrescher ausgeführt ist, gezeigt. Die Erntemaschine 50 umfasst eine Brennkraftmaschine 51 sowie eine Kühlvorrichtung 52. Die Brennkraftmaschine 51 wird durch die Kühlvorrichtung 52 gekühlt, welche zu diesem Zweck Umgebungsluft durch einen mit einer siebartigen Oberfläche 4 versehenen Kühlerkorb 1 ansaugt. Zur Entfernung von Partikeln, die sich auf der Oberfläche 4 des Kühlerkorbes 1 ablagern, ist eine Reinigungsvorrichtung 2 vorgesehen. Der Kühlerkorb 1 und die an diesem angeordnete Reinigungsvorrichtung 2 werden nachfolgen im Detail beschrieben.

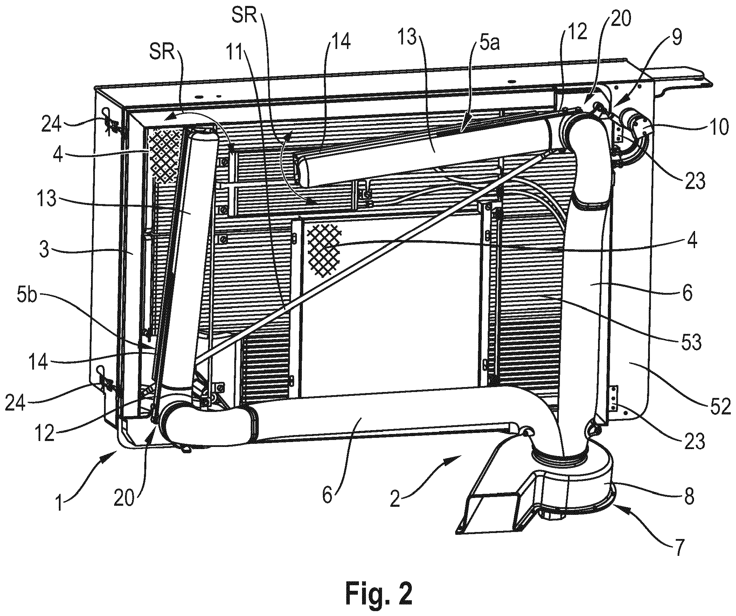

Die Darstellung in Fig. 2 zeigt eine perspektivische Ansicht der Kühlvorrichtung 52 sowie des Kühlerkorbes 1 mit der Reinigungsvorrichtung 2. Der Kühlerkorb 1 ist im Wesentlichen quaderförmig ausgeführt und umfasst ein eine korrespondiere Form aufweisendes Rahmenbauteil 3, in welchem die siebartige Oberfläche 4 aufgespannt ist. Die Oberfläche 4 kann als Sieb oder Gitter ausgeführt sein. Die Oberfläche 4 ist planar ausgeführt. Dabei können die Lochgröße, die Lochanzahl, die Lochform, die Position, die Ausrichtung sowie die Größe des Gitters bzw. Siebes relativ frei gewählt werden. Durch eine sehr feine Lochung und eine sehr große Gitterfläche, kann das Aufbauen einer Matte aus Partikeln verlangsamt und das Verschmutzen von der Oberfläche 4 nachgeordneten Kühllamellen 53 der Kühlvorrichtung 52 reduziert werden.

Die an dem Kühlerkorb 1 angeordnete Reinigungsvorrichtung 2 ist als eine sich zyklisch über die Oberfläche 4 des Kühlerkorbes 1 bewegende Absaugvorrichtung ausgebildet. Die Absaugvorrichtung umfasst zwei Absaugarme 5a, 5b, welche durch jeweils einen Absaugkanal 6 mit einem gemeinsamen Absauggebläse 7 verbunden sind. Die Absaugkanäle 6 sind an dem Rahmenbauteil 3 des Kühlerkorbes 1 angeordnet. Das Absauggebläse 7 weist ein Gehäuse 8 auf, in welchem ein Rotor 28 angeordnet ist. Das Absauggebläse 7 ist am Maschinengehäuse der Erntemaschine 50 oder der Kühlvorrichtung 52 ortsfest angeordnet. Hierdurch wird die statische Anbindung des Absauggebläses 7, die hydraulische Leitungsführung für dessen Antrieb sowie die Anordnung benachbarter Verkleidungsteile vereinfacht.

Die Absaugarme 5a, 5b sind jeweils mittels innerhalb des Kühlerkorbes 1 diagonal gegenüberliegend positionierter Lagerstellen 20 um eine zu der Oberfläche 4 vertikal orientierte Achse 19 schwenkbar gelagert. Insbesondere sind die Lagerstellen 20 in dem Rahmenbauteil 3 angeordnet. Hierfür können Eckelemente des Rahmenbauteils 3 als Gussteile ausgeführt sein, welche zur Aufnahme der Lagerstellen 20 eingerichtet sind.

Zum Antreiben der Absaugarme 5a, 5b ist einem der Absaugarme 5a ein Kurbeltrieb 9 zugeordnet, der von einem Motor 10, der als Hydraulikmotor oder als Elektromotor ausgeführt sein kann, angetrieben wird. Durch den Kurbeltrieb 9 wird der eine Absaugarm 5a unmittelbar angetrieben und in einer Schwenkrichtung SR über die Oberfläche 4 bewegt. Der andere Absaugarm 5b ist durch eine Koppelstange 11 trieblich mit dem unmittelbar angetriebenen Absaugarm 5a gekoppelt. Die Koppelstange 11 überträgt die Schwenkbewegung des einen Absaugarmes 5a auf den anderen Absaugarm 5b, so dass auch dieser in einer Schwenkrichtung SR bewegt wird. Wie aus der Darstellung in Fig. 2 ersichtlich, ist die Koppelstange 11 hinter der siebartigen Oberfläche 4 angeordnet. Dadurch wird vermieden, dass die Absaugarme 5a, 5b, die in ihrer Bewegung die Koppelstange 11 kreuzen müssen, mit dieser kollidieren. Die Anordnung der Koppelstange 11 erfolgt in einer Ebene hinter den Abweiselementen 14 und vor den Kühllamellen 53. Die Absaugarme 5a, 5b sind in einer Ruheposition, in der die Absaugvorrichtung inaktiv ist, zueinander benachbart positioniert. Das heißt, dass die freien Enden der Absaugarme 5a, 5b in der Ruheposition einander zugewandt sind.

Jeder Absaugarm 5a, 5b umfasst ein Halteelement 12, welches insbesondere als ein mittels Laserschneidtechnik hergestelltes Blechteil ausgeführt ist, an welchem eine Absaugdüse 13 angeordnet ist. Die Absaugdüse 13 ist bevorzugt als ein aus Kunststoff gefertigtes Rotationsteil ausgeführt. Die Absaugdüse 13 weist einen länglichen Eintrittsbereich 13a, welcher der planaren Oberfläche 4 zugewandt ist, und einen der Oberfläche 4 abgewandten zylindrischen Austrittsbereich 13b auf. Dem Eintrittsbereich 13a der Absaugdüse 13 gegenüberliegend ist ein flächiges Abschirmelement 14 angeordnet, wobei sich zwischen der Absaugdüse 13 und dem Abschirmelement 14 die siebartige Oberfläche 4 befindet.

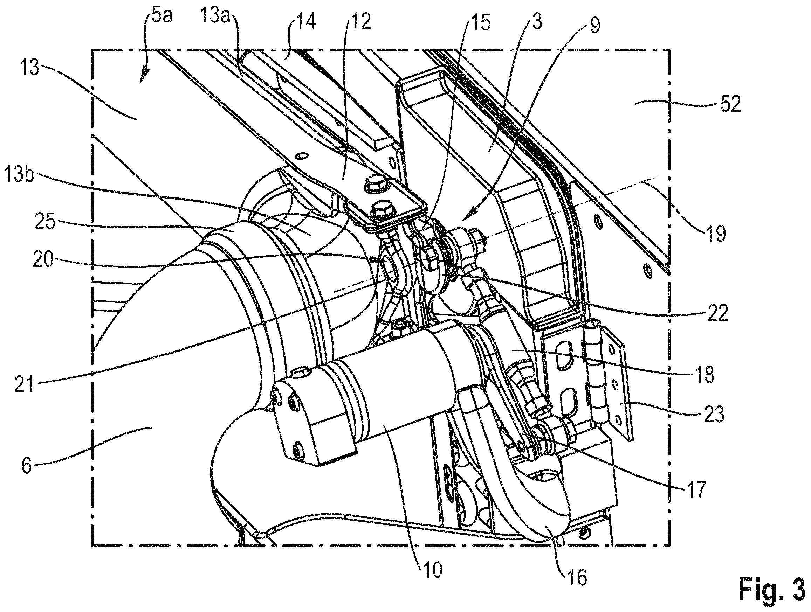

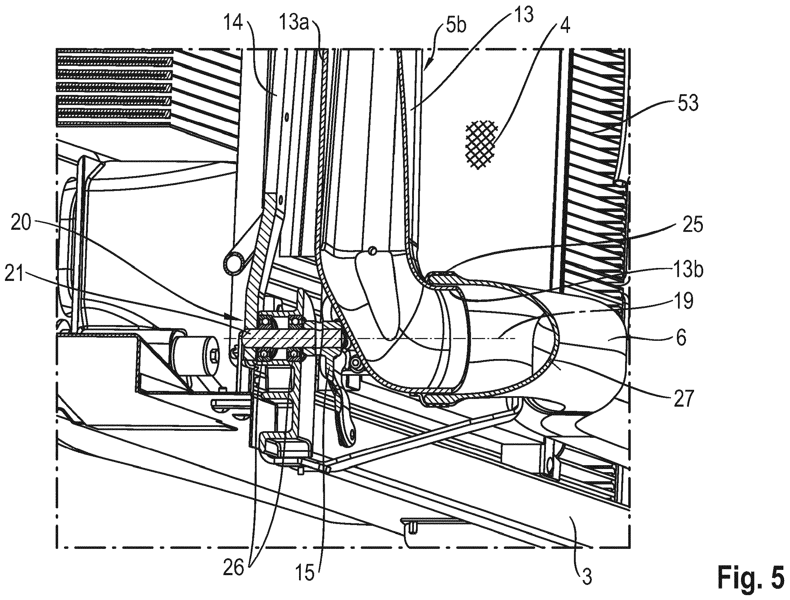

In Fig. 3 ist eine perspektivische Teilansicht des unmittelbar durch den Kurbeltrieb 9 angetriebenen Absaugarmes 5a der Reinigungsvorrichtung 2 gemäß Fig. 2 dargestellt. Das Halteelement 12 und das Abschirmelement 14 sind an einer Absaugarmaufnahme 15 angeordnet, welche um eine Welle 21 der Lagerstelle 20 drehbar gelagert ist. Die Welle 21 ist in dem Rahmenbauteil 3 drehbar gelagert angeordnet. Hierzu ist ein Paar Wälzlager 26 in dem Rahmenbauteil 3 angeordnet. Die Längsachse der Welle 21 bildet die Achse 19, um welche der Absaugarm 5a schwenkbar ist. Dabei erfolgt die Anordnung der Absaugdüse 13 des Absaugarmes 5a derart, dass der zylindrische Austrittsbereich 13b zumindest nahezu koaxial zu der Längsachse der Welle 21 respektive der Achse 19 ausgerichtet ist. Entsprechendes gilt für die Anordnung der Absaugdüse 13 des Absaugarmes 5b, wie aus der Darstellung in Fig. 5 ersichtlich ist. Der Eintrittsbereich 13a der Absaugdüse 13 erstreckt sich im Wesentlichen parallel zu der Oberfläche 4.

Der Motor 10 zum Antreiben des Absaugarmes 5a ist an einem freien Ende eines gekröpften Armes 16 befestigt, welcher mit seinem anderen Ende mit dem Rahmenbauteil 3 der Kühlerkorbes 1 verbunden ist. Der Kurbeltrieb 9 umfasst eine Kurbelwelle 17 sowie einen Pleuel 18. An dem Rotor des Motors 10 ist die Kurbelwelle 17 angeordnet, welche die von dem Motor 10 hervorgerufene Rotationsbewegung auf den Pleuel 18 überträgt. Der Pleuel 18 greift an einem Hebelarm 22 der Absaugarmaufnahme 15 an. Mittels des Kurbeltriebes 9 wird ein sinusförmiger Bewegungsablauf auf den Absaugarm 5a übertragen. Der Absaugarm 5a wird somit um die Achse 19 verschwenkt und überstreicht dabei eine etwa kreissegmentförmige Fläche. Die kreissegmentförmige Fläche kann etwa einem Viertelkreis entsprechen.

Durch die Koppelstange 11 wird die sinusförmige Bewegung synchron auf den diagonal gegenüberliegend angeordneten Absaugarm 5b übertragen. Dabei sorgt die Anordnung der Absaugarme 5a, 5b über Kreuz für eine gegenläufige Bewegung der Absaugarme 5a, 5b, so dass es trotz einer Überlappung der durch die Absaugarme 5a, 5b überstrichenen Oberfläche 4 nicht zu einer Kollision kommen kann. Der durch die Koppelstange 11 mittelbar angetriebene Absaugarm 5b überstreicht dabei ebenfalls eine etwa kreissegmentförmige, insbesondere viertelkreisförmige, Fläche. Durch Festlegung eines entsprechenden Seitenverhältnisses der quaderförmigen Oberfläche 4 des Kühlerkorbes 1 und den eingesetzten Kurbeltrieb 9 können diese beiden kreissegmentförmige Flächen soweit ineinander verschachtelt werden, dass die von den beiden Absaugarmen 5a, 5b überstrichene Fläche bei rund 94% der Gesamtfläche der siebartigen Oberfläche 4 liegt und die Absaugarme 5a, 5b dabei kollisionsfrei bewegt werden können.

Das Rahmenbauteil 3 des Kühlerkorbes 1 ist mittels Scharnieren 23 schwenkbar an der Kühlvorrichtung 52 angeordnet. Die Scharniere 23 sind an einer kurzen Seite des quaderförmigen Rahmenbautriels 3 angeordnet. Zur lösbaren Arretierung des Kühlerkorbes 1 sind auf der den Scharnieren 23 gegenüberliegenden Seite des Rahmenbauteils 3 Arretiermittel 24 vorgesehen. Die Arretiermittel 24 können beispielsweise als Schnellspannverschlüsse ausgebildet sein. Dadurch wird die Zugänglichkeit zu der Kühlvorrichtung 52 gewährleistet, indem der Kühlerkorb 1 und die daran angeordneten Komponenten der Reinigungsvorrichtung 2 gegenüber der Kühlvorrichtung 52 ausschwenkbar sind.

Der Übergangsbereich zwischen dem Austrittsbereich 13b der Absaugdüse 13 und dem Absaugkanal 6 wird durch eine Dichtmanschette 25 abgedichtet. Dies wird dadurch ermöglicht, dass der Absaugarm 5a im Austrittsbereich 13b eine reine Drehbewegung um die Achse 19 ausführt. Der sich an den Austrittsbereich 13b anschließende Absaugkanal 6 ist unabhängig von der Absaugarm 5a an dem Rahmenbauteil 3 befestigt. Der Übergang zwischen dem Austrittsbereich 13b des sich drehenden Absaugarm 5a und dem ortsfestem Absaugkanal 6 muss deshalb lediglich eine abdichtende Funktion erfüllen, was durch die als Gummimanschette ausgebildete Dichtmanschette 25 realisiert wird.

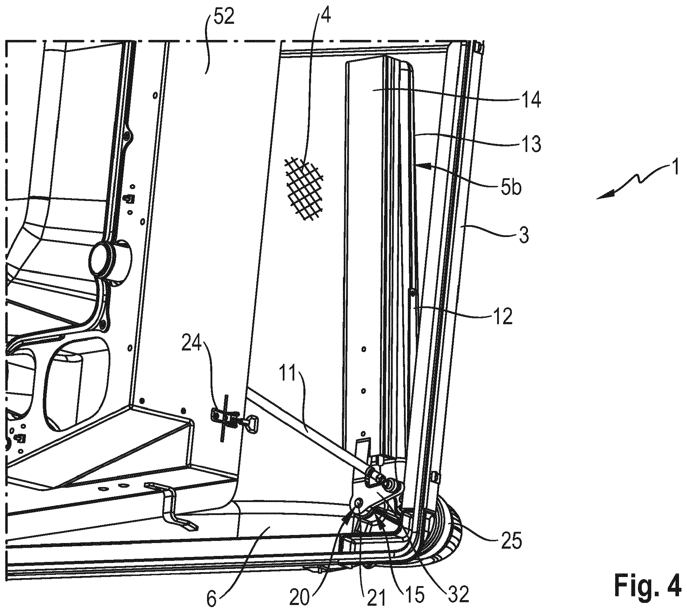

Die Darstellung in Fig. 4 zeigt eine perspektivische Teilansicht des mittelbar angetriebenen Absaugarmes 5b der Reinigungsvorrichtung 2 des Kühlerkorbes 1 gemäß Fig. 2. Der durch die Koppelstange 11 mittelbar angetriebene Absaugarm 5b ist in der diagonal gegenüberliegenden Lagerstelle 20 des unmittelbar angetriebenen Absaugarmes 5a schwenkbar gelagert, wobei die Lagerstelle 20 innerhalb der Oberfläche 4 des Kühlerkorbes 1 positioniert ist. Der Kühlerkorb 1 ist dabei in einer gegenüber der Kühlvorrichtung 52 ausgeschwenkten Position dargestellt. Die Absaugarmaufnahme 15 des Absaugarmes 5b weist eine im Wesentlichen L-förmige Form mit zwei Schenkeln auf. An dem einen Schenkel der Absaugarmaufnahme 15, der unter einem Winkel zur Längsachse des Absaugarmes 5b geneigt und als Hebelarm 32 ausgebildet ist, greift die Koppelstange 11 an, während an dem andren Schenkel, der sich im Wesentlichen parallel zu Längsachse des Absaugarmes 5b erstreckt, Teile des Absaugarmes 5b befestigt sind. Wie bei dem Absaugarm 5a auch ist die Absaugdüse 13 mittels des Halteelementes 12 an der Absaugarmaufnahme 15 angeordnet, während das der Absaugdüse 13 gegenüberliegende Abschirmelement 14 unmittelbar an der Absaugarmaufnahme 15 angeordnet ist.

Die jeweilige Absaugarmaufnahme 15 der Absaugarme 5a, 5b ist bevorzugt als ein Gussteil ausgeführt. Die als Gussteil ausgeführten Absaugarmaufnahmen 15 zeichnen sich durch eine kompakte Ausführung und deshalb durch ein geringes Gewicht aus. Die Absaugdüse 13 der Absaugarme 5a, 5b sind für eine größtmögliche Abdeckung der Oberfläche 4 weit ausladend ausgeführt. Um die jeweilige Absaugdüse 13 an der jeweiligen kompakt ausgeführten Absaugarmaufnahme 15 anzubinden, sind diese durch die Halteelemente 12 aufgenommen. Die Halteelemente 12 werden von einer Nut in den Absaugarmaufnahme 15 exakt aufgenommen und an diesen mittels einer Schraubverbindung befestigt. Dabei wird das jeweilige Halteelement 12 vertikal zur Oberfläche 4 ausgerichtet an der Absaugarmaufnahme 15 befestigt. Aufgrund der Ausrichtung vertikal zur Oberfläche 4 kann das jeweilige Halteelement 12 elastisch an die aus Kunststoff bestehende Absaugdüse 13 herangezogen werden und deren Breitentoleranz ausgleichen. Wegen der Anordnung normal zu der siebartigen Oberfläche 4 besitzen die Halteelemente 12 eine hohe Steifigkeit. Somit können die Halteelemente 12 können mit zunehmendem Abstand zu der jeweiligen Lagerstelle 20 schlanker ausgeführt werden. Die Absaugdüsen 13 können somit von den Halteelementen 12 mit einer breiten Basis aufgenommen und von statischen Kräften freigestellt werden. Auch in radialer Richtung zu der jeweiligen Lagerstelle 20 ist ein Toleranzausgleich der Absaugdüsen 13 durch Halteelemente 12 möglich.

In Fig. 5 ist eine Teilschnittansicht des Absaugarmes 5b des Kühlerkorbes 1 gemäß Fig. 4 dargestellt. Der Absaugarm 5b ist mit der drehbar gelagerten Welle 21 um die ortsfeste Achse 19 in der Lagerstelle 20 schwenkbar. Dazu ist die Welle 21 mittels des Paares Wälzlager 26 drehbar gelagert. Die Absaugarmaufnahme 15 des Absaugarmes 5b ist drehfest an der Welle 21 angeordnet. Der zylindrische Austrittsbereich 13b der Absaugdüse 13, der in den Absaugkanal 6 übergeht ist durch die Dichtmanschette 25 abgedichtet. Die Teilschnittansicht gemäß Fig. 5 veranschaulicht noch einmal die Anordnung des Absaugarmes 5b respektive der Absaugdüse 13 und des Abschirmelementes, welcher um die Achse 19 schwenkbar ist, die mit der Längsachse der Welle 21 zusammenfällt.

Da lediglich der Bereich der die jeweilige Welle 21 aufnehmenden Wälzlager 26 der Lagerstellen 20 auf der Innenseite und der Außenseite der siebartigen Oberfläche 4 abgedichtet werden muss und die Lagerstellen 20 ortsfest sind, wird der Aufwand der hierfür notwendigen Abdichtung minimiert.

Die Absaugkanäle 6, die mit dem jeweiligen Austrittsbereich 13b der Absaugarme 5a, 5b verbunden sind, sind innenseitig mit einer glatten Mantelfläche 27 ausgeführt und weisen einen von Knicken oder scharfen Kanten freien Verlauf auf. Die Absaugkanäle 6 sind wie die Absaugdüsen 13 als aus Kunststoff gefertigte Rotationsteile ausgeführt. Durch die glattwandige Ausführung der innenseitigen Mantelfläche 27 und den strömungsoptimierten Verlauf der Absaugkanäle 6 wird dem Auftreten von Ablagerungen im Inneren der Absaugkanäle 6 begegnet.

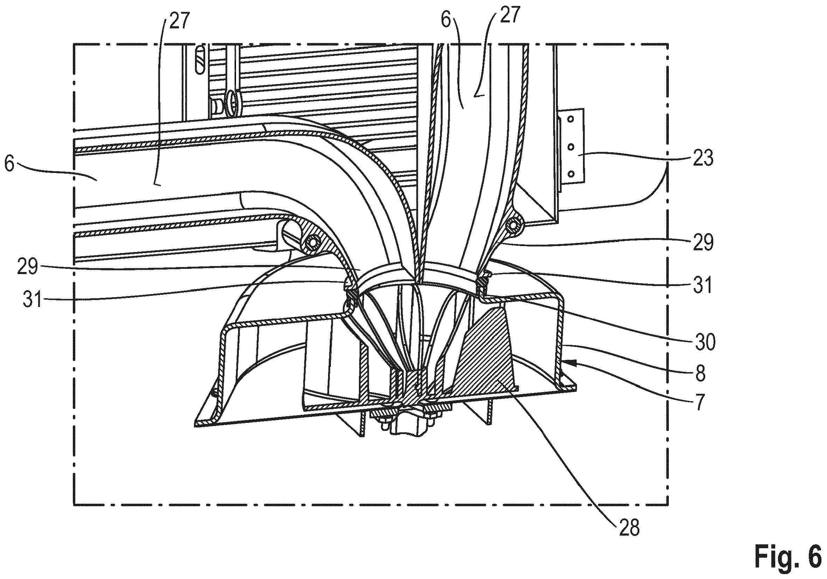

In Fig. 6 ist eine Teilschnittansicht des Gehäuses 8 des Absauggebläses 7 der Reinigungsvorrichtung 2 des Kühlerkorbes 1 gemäß Fig. 2 dargestellt. Wie bereits ausgeführt sind die Absaugkanäle 6 an dem Rahmenbauteil 3 angeordnet, während das Absauggebläse 7 am Maschinenrahmen der Erntemaschine 50 unterhalb des Kühlerkorbes 1 ortsfest angebracht ist. Der Abstand zwischen dem Absauggebläse 7 und dem Rahmenbauteil 3 ist dabei möglichst gering gewählt. Die Absaugkanäle 6 weisen jeweils einen Endabschnitt 29 auf, die gemeinsam in einen Anschlussabschnitt 30 des Gehäuses 8 einmünden. Die beiden Endabschnitte 29 der Absaugkanäle 6 bilden dabei an ihrer äußeren Umfangsfläche einen einzelnen flanschförmigen Anschluss 31 aus, der gegenüber dem korrespondierend ausgebildeten Anschlussabschnitt 30 des Gehäuses 8 positionierbar ist. Der flanschförmige Anschluss 31 der Absaugkanäle 6 und der Anschlussabschnitt 30 des Gehäuses 8 bilden eine Trennstelle. Aufgrund der Anordnung des Absauggebläses 7 unterhalb des Kühlerkorbes 1 mit geringstmöglicher Beabstandung zum Rahmenbauteil 3 sind die zu überbrückenden Distanzen zwischen den Austrittsöffnungen 13b der Absaugdüsen 13 und dem Anschlussabschnitt 30 des Gehäuses 8 gering. Zudem wird der Guttransport durch die Schwerkraft unterstützt.

Die Endabschnitte 29 der beiden Absaugkanäle 6 münden mit einer Querschnittsverjüngung in das Gehäuse 8 ein. Dabei kann das Querschnittsverhältnis der Absaugkanäle 6 in diesem Bereich in Relation zur Länge des jeweiligen Absaugkanals 6 stehen. Hierdurch kann ein nahezu gleichmäßiger Unterdruck in den beiden Absaugkanälen 6 aufgebaut werden.

Durch die Verwendung zweier Absaugdüsen 13, die durch jeweils einen Absaugkanal 6 mit dem nur einen Absauggebläse 7 verbunden sind, erfolgt zwangsläufig die Zusammenführung von zwei Teilvolumenströmen. Diese Zusammenführung birgt zum einen eine Verstopfungsgefahr in dem Zusammenführungspunkt und zum anderen das Problem, dass der vom Absauggebläse 7 erzeugte Unterdruck gleichmäßig auf beide Absaugdüsen 13 und Absaugkanäle 6 einwirken muss. Deshalb wurde die Zusammenführung direkt vor den Rotor 28 des Absauggebläses 7 in den Entstehungspunkt des Unterdruckes gelegt. Hierdurch wird das Risiko für Verstopfungen durch die in den Teilvolumenströmen enthaltenen Partikel im Zusammenführungspunkt und eine Einwirkung unterschiedlicher Unterdrücke auf die beiden Absaugkanäle 6 bzw. die Absaugdüsen 13 minimiert.

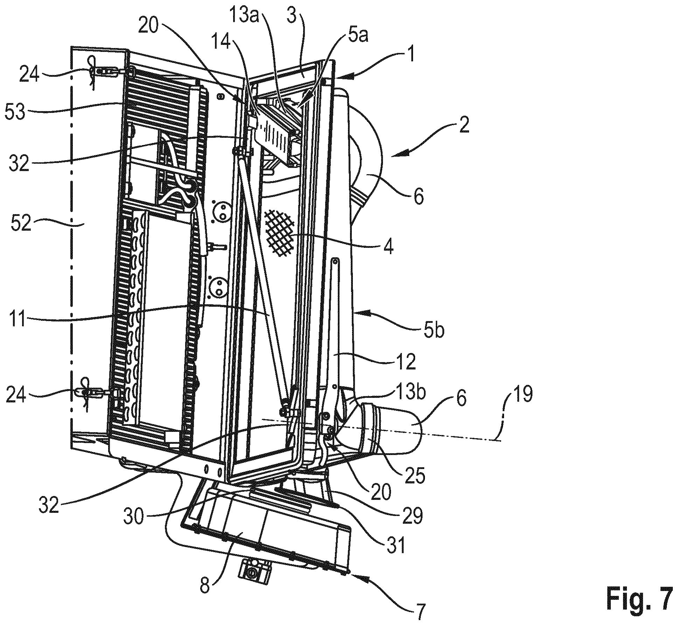

Die Darstellung in Fig. 7 zeigt eine perspektivische Ansicht der Kühlvorrichtung 52 und des Kühlerkorbes 1 gemäß Fig. 2 in einer Wartungsposition. Durch das Öffnen der Arretiermittel 24 lässt sich der Kühlerkorb 1 mitsamt der Reinigungsvorrichtung 2 verschwenken, so dass der hinter dem Kühlerkorb 1 liegende Bereich der Kühlvorrichtung 52 zugänglich ist. Während die Absaugkanäle 6 mit dem Kühlerkorb 1 verschwenkt werden, ist das ortsfeste Gehäuse 8 des Absauggebläses 7 in einer zur Vertikalen geneigten Position an der Kühlvorrichtung 52 bzw. dem Maschinengehäuse der Erntemaschine 50 befestigt. Dabei fällt das Gehäuse 8 schräg nach unten ab. Durch eine abgeschrägte Ausgestaltung des gemeinsamen flanschförmigen Anschlusses 31 der beiden Absaugkanäle 6 lässt sich beim Schließen des Kühlerkorbes 1 eine selbstdichtende Anordnung erreichen, da der flanschförmige Anschluss 31 wie auf einer Rampe auf den Anschlussabschnitt 30 aufgeschoben werden kann. Die Trennstelle dient nicht nur dem Öffnen und Schließen des Kühlerkorbes 1, sondern ermöglicht auch eine Verstopfungsbeseitigung unmittelbar an dem Absauggebläse 7.

Weiterhin ist aus der Darstellung in Fig. 7 ersichtlich, wie die Koppelstange 11 an der jeweiligen Absaugarmaufnahme 15 der Absaugarme 5a, 5b angeordnet ist. Die Absaugaufnahmen 15 weisen jeweils den nach innen gekröpften Hebelarm 32 auf, an deren freien Enden die Koppelstange 11 angeordnet ist, die die Absaugarme 5a, 5b trieblich miteinander verbindet.

Selbstfahrende Erntemaschinen weisen in der Regel ein Hydrauliksystem auf, welches dem Antrieb von verschiedenen Arbeitsaggregaten dient. Im Fall der als Mähdrescher ausgeführten Erntemaschine 50 ist das Hydrauliksystem als Konstantdrucksystem ausgebildet. Alternativ kann das Hydrauliksystem der Erntemaschine mit einem konstanten Volumenstrom arbeiten.

Dabei können, je nach Ausgestaltung des Hydrauliksystems, unterschiedliche Antriebsmittel zum Schwenken des unmittelbar angetriebenen Absaugarmes 5a und des mit diesem trieblich verbundenen Absaugarmes 5b zur Anwendung kommen. Im Fall des mit einem konstanten Volumenstrom arbeitenden Hydrauliksystems ist es vorteilhafter, den zumindest einen Motor 10 als Hydraulikmotor auszubilden, wie weiter oben bereits ausgeführt wurde. Der als Hydraulikmotor ausgeführte Motor 10 treibt den Kurbeltrieb 9 an.

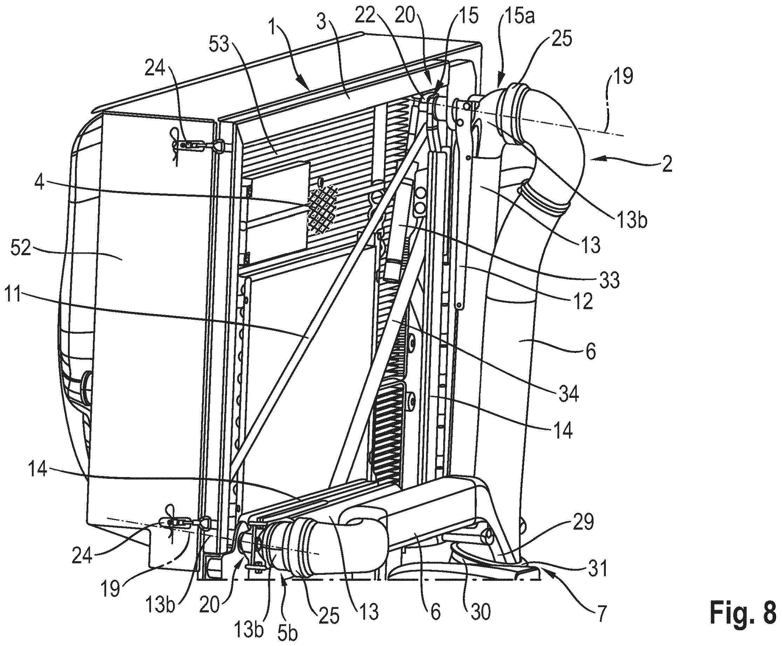

Handelt es sich bei dem Hydrauliksystem der Erntemaschine 50 hingegen um ein Konstantdrucksystem, so bietet sich als Antrieb des unmittelbar angetriebenen Absaugarmes 5a zumindest ein Hydraulikzylinder an. In Fig. 8 ist eine perspektivische Ansicht des Kühlerkorbes 1 gemäß einer zweiten Ausführungsform dargestellt, bei welcher zum Antrieb der Reinigungsvorrichtung 2 zumindest ein Hydraulikzylinder 33 zum Einsatz kommt. Die zweite Ausführungsform des Kühlerkorbes 1 und der Reinigungsvorrichtung 2 unterscheidet sich von der vorangehend beschriebenen Ausführungsform lediglich durch das Antriebsmittel des unmittelbar angetriebenen Absaugarmes 5a. Der zumindest eine Hydraulikzylinder 33, der dem Antrieb des Absaugarmes 5a dient, ist hierzu mit einem Ende an einer Halterung 34 angelenkt, die an dem Rahmenbauteil 3 des Kühlerkorbes 1 angeordnet ist. Mit seinem anderen Ende ist der Hydraulikzylinder 33 an dem Hebelarm 22 der Absaugaufnahme 15 des unmittelbar angetriebenen Absaugarmes 5a angelenkt. Bei dieser Ausführungsform entfallen der Motor 10 und Kurbeltrieb 9. Durch eine alternierende Druckbeaufschlagung lässt sich eine translatorische Bewegung des Hydraulikzylinders 33 hervorrufen, welche auf den Hebelarm 22 übertragen wird, um den Absaugarm 5a, das heißt die Absaugdüse 13 und das Abschirmelement 14, um die Achse 19 zu verschwenken. Die alternierende Druckbeaufschlagung lässt sich zeitgesteuert oder sensorgesteuert realisieren. Bevorzugt liegt der zumindest eine Hydraulikzylinder 33 - wie die Koppelstange 11 auch - in einer Ebene hinter der siebartigen Oberfläche 4 des Kühlerkorbes 1 und vor den Kühllamellen 53. Der andere Absaugarm 5b wird, wie im Zusammenhang mit der ersten Ausführungsform weiter oben bereits beschrieben, durch die Koppelstange 11 mittelbar angetrieben.

### Bezugszeichenliste

| | | | |
|---|---|---|---|
| 1 | Kühlerkorb | 28 | Rotor |
| 2 | Reinigungsvorrichtung | 29 | Endabschnitt |
| 3 | Rahmenbauteil | 30 | Anschlussabschnitt |
| 4 | Oberfläche | 31 | Flanschförmiger Anschluss |
| 5a | Absaugarm | 32 | Hebelarm |
| 5b | Absaugarm | 33 | Hydraulikzylinder |
| 6 | Absaugkanal | 34 | Halterung |
| 7 | Absauggebläse | 50 | Erntemaschine |
| 8 | Gehäuse | 51 | Brennkraftmaschine |
| 9 | Kurbeltrieb | 52 | Kühlvorrichtung |
| 10 | Motor | 53 | Kühllamelle |
| 11 | Koppelstange | | |
| 12 | Halteelement | SR | Schwenkrichtung |
| 13 | Absaugdüse | | |
| 13a | Eintrittsbereich | | |
| 13b | Austrittsbereich | | |
| 14 | Abschirmelement | | |
| 15 | Absaugaufnahme | | |
| 16 | Gekröpfter Arm | | |
| 17 | Kurbelwelle | | |
| 18 | Pleuel | | |
| 19 | Achse | | |
| 20 | Lagerstelle | | |
| 21 | Welle | | |
| 22 | Hebelarm | | |
| 23 | Scharnier | | |
| 24 | Arretiermittel | | |
| 25 | Dichtmanschette | | |
| 26 | Wälzlager | | |
| 27 | Mantelfläche | | |

## Patentansprüche

1. Kühlerkorb (1) mit einer Reinigungsvorrichtung (2), wobei der Kühlerkorb (1) ein Rahmenbauteil (3) aufweist, innerhalb dessen eine siebartige Oberfläche (4) ausgebildet ist, und die Reinigungsvorrichtung (2) eine sich zyklisch über die Oberfläche (4) des Kühlerkorbes (1) bewegende Absaugvorrichtung umfasst, welche sich auf der Oberfläche ablagernde Partikel aufnimmt, **dadurch gekennzeichnet, dass** die Absaugvorrichtung zwei über die Oberfläche (1) bewegbare Absaugarme (5a, 5b) aufweist, die jeweils eine Absaugdüse (13) mit einem länglichen Eintrittsbereich (13a), welcher der Oberfläche (4) zugewandt ist, und einen der Oberfläche (4) abgewandten zylindrischen Austrittsbereich (13b) aufweisen, der an einem Ende des jeweiligen Absaugarmes (5a, 5b) angeordnet ist, wobei an dem jeweiligen Austrittsbereich (13b) jeweils ein Absaugkanal (6) angeschlossen ist, welche im Bereich eines gemeinsamen Absauggebläses (7) in ein das Absauggebläse (7) aufnehmendes Gehäuse (8) münden.

2. Kühlerkorb (1) nach Anspruch 1, **dadurch gekennzeichnet, dass** die beiden Absaugkanäle (6) mit einem eine Querschnittsverjüngung aufweisenden Endabschnitt (29) in das Gehäuse (8) münden.

3. Kühlerkorb (1) nach Anspruch 1 oder 2, **dadurch gekennzeichnet, dass** das Gehäuse (8) in einer unterhalb des Kühlerkorbes (1) liegenden Ebene angeordnet ist.

4. Kühlerkorb (1) nach einem der Ansprüche 2 oder 3, **dadurch gekennzeichnet, dass** die Endabschnitte (29) der Absaugkanäle (6) an ihrer äußeren Umfangsfläche einen einzelnen flanschförmigen Anschluss (31) ausbilden, der gegenüber einem korrespondierend ausgebildeten Anschlussabschnitt (30) des Gehäuses (8) positionierbar ist.

5. Kühlerkorb (1) nach einem der vorangehenden Ansprüche, **dadurch gekennzeichnet, dass** die Absaugkanäle (6) innenseitig mit einer glatten Mantelfläche (27) ausgeführt sind und einen von Knicken oder scharfen Kanten freien Verlauf aufweisen.

6. Kühlerkorb (1) nach einem der vorangehenden Ansprüche, **dadurch gekennzeichnet, dass** die Absaugarme (5a, 5b) jeweils um eine vertikal zu der Oberfläche orientierten Achse (19) einer ortfesten Lagerstelle (20) schwenkbar gelagert sind.

7. Kühlerkorb (1) nach Anspruch 6, **dadurch gekennzeichnet, dass** die Lagerstellen (20) innerhalb des Kühlerkorbes (1), insbesondere in dem Rahmenbauteil (3) oder der Oberfläche (4,) angeordnet sind.

8. Kühlerkorb (1) nach einem der Ansprüche 6 oder 7, **dadurch gekennzeichnet, dass** die zylindrischen Austrittsbereiche (13b) im Wesentlichen koaxial zu der Achse (19) angeordnet sind.

9. Kühlerkorb (1) nach einem der vorangehenden Ansprüche, **dadurch gekennzeichnet, dass** die Absaugkanäle (6) an dem Rahmenbauteil (3) befestigt sind.

10. Selbstfahrende Erntemaschine (50), insbesondere Mähdrescher oder Feldhäcksler, mit einer Brennkraftmaschine (51), wobei der Brennkraftmaschine (51) eine Kühlvorrichtung (51) mit einem Kühlerkorb (1) zugeordnet ist, der nach einem der vorangehenden Ansprüche zugeordnet ist.

11. Selbstfahrende Erntemaschine (50) nach Anspruch 10, **dadurch gekennzeichnet, dass** die Oberfläche (4) des Kühlerkorbes (1) und die Reinigungsvorrichtung (2) an einem gemeinsamen Rahmenbauteil (3) angeordnet sind, welches gegenüber der Kühlvorrichtung (52) verschwenkbar an der Erntemaschine (50) angeordnet ist.

12. Selbstfahrende Erntemaschine (50) nach Anspruch 10 oder 11, **dadurch gekennzeichnet, dass** das Gehäuse (8), welches das Absauggebläse (7) aufnimmt, unterhalb des verschwenkbaren Rahmenbauteils (3) des Kühlerkorbes (1) ortsfest an der Erntemaschine (50) angeordnet ist.

13. Selbstfahrende Erntemaschine (50) nach einem der Ansprüche 10 bis 12, **dadurch gekennzeichnet, dass** zwischen den Endabschnitten (29) der Absaugkanäle (6) und dem Anschlussabschnitt (30) an dem Gehäuse (8) eine Trennstelle ausgebildet ist.

## Claims

1. A radiator screen (1) with a cleaning device (2), wherein the radiator screen (1) has a frame component (3) inside which a sieve-like surface (4) is formed, and the cleaning device (2) comprises a suction device which moves in a cyclic manner over the surface (4) of the radiator screen (1) and which picks up particles which are deposited on the surface, **characterized in that** the suction device has two suction arms (5a, 5b) which can move over the surface (1) and which each have a suction nozzle (13) with an elongated inlet region (13a) which faces the surface (4) and a cylindrical outlet region (13b) which faces away from the surface (4) which is disposed at one end of each suction arm (5a, 5b), wherein a respective suction duct (6) is connected to the respective outlet region (13b) and discharges in the region of a common suction fan (7) into a housing (8) which receives the suction fan (7).

2. The radiator screen (1) according to claim 1, **characterized in that** the two suction ducts (6) discharge into the housing (8) via an end section (29) which is provided with a tapered cross section.

3. The radiator screen (1) according to claim 1 or claim 2, **characterized in that** the housing (8) is disposed in a plane which lies underneath the radiator screen (1).

4. The radiator screen (1) according to claim 2 or claim 3, **characterized in that** the outer peripheral surfaces of the end sections (29) of the suction ducts (6) form a single flange-like connection (31) which can be positioned opposite to a correspondingly configured connecting section (30) of the housing (8).

5. The radiator screen (1) according to one of the preceding claims, **characterized in that** the interior of the suction ducts (6) are formed with a smooth curved surface (27) the profile of which is free from kinks or sharp edges.

6. The radiator screen (1) according to one of the preceding claims, **characterized in that** the suction arms (5a, 5b) are respectively pivotably mounted about an axis (19) of a fixedly mounted bearing (20), which axis is orientated perpendicular to the surface.

7. The radiator screen (1) according to claim 6, **characterized in that** the bearings (20) are disposed inside the radiator screen (1), in particular in the frame component (3) or the surface (4).

8. The radiator screen (1) according to claim 6 or claim 7, **characterized in that** the cylindrical outlet region (13b) is disposed substantially coaxially to the axis (19).

9. The radiator screen (1) according to one of the preceding claims, **characterized in that** the suction ducts (6) are attached to the frame component (3).

10. A self-propelled harvesting machine (50), in particular a combine harvester or forage harvester, having an internal combustion engine (51), wherein a radiator device (51) with a radiator screen (1) according to one of the preceding claims is associated with the internal combustion engine (51).

11. The self-propelled harvesting machine (50) according to claim 10, **characterized in that** the surface (4) of the radiator screen (1) and the cleaning device (2) are disposed on a common frame component (3) which is pivotably mounted on the harvesting machine (50) opposite to the radiator device (52).

12. The self-propelled harvesting machine (50) according to claim 10 or claim 11, **characterized in that** the housing (8) which receives the suction fan (7) is fixedly mounted on the harvesting machine (50) underneath the pivotable frame component (3) of the radiator screen (1).

13. The self-propelled harvesting machine (50) according to one of claims 10 to 12, **characterized in that** a point of separation is formed on the housing (8) between the end sections (29) of the suction ducts (6) and the connector section (30).

## Revendications

1. Tamis de radiateur (1) comprenant un dispositif de nettoyage (2), le tamis de radiateur (1) comportant un élément de bâti (3) à l'intérieur duquel est conçue une surface en forme de tamis (4), et le dispositif de nettoyage (2) incluant un dispositif d'aspiration qui se déplace cycliquement sur la surface (4) du tamis de radiateur (1) et qui ramasse des particules déposées sur la surface, **caractérisé en ce que** le dispositif d'aspiration comporte deux bras d'aspiration (5a, 5b) qui sont déplaçables sur la surface (1) et qui comportent respectivement une buse d'aspiration (13) avec une zone d'entrée allongée (13a) qui est tournée vers la surface (4), et une zone de sortie cylindrique (13b) qui est tournée à l'opposé de la surface (4) et qui est disposée à une extrémité du bras d'aspiration respectif (5a, 5b), à la zone de sortie respective (13b) étant relié respectivement un canal d'aspiration (6) qui, dans la zone d'un ventilateur aspirant commun (7), débouche dans un carter (8) recevant le ventilateur aspirant (7).

2. Tamis de radiateur (1) selon la revendication 1, **caractérisé en ce que** les deux canaux d'aspiration (6) débouchent dans le carter (8) par une portion d'extrémité (29) comportant un rétrécissement de section transversale.

3. Tamis de radiateur (1) selon la revendication 1 ou 2, **caractérisé en ce que** le carter (8) est disposé dans un plan situé au-dessous du tamis de radiateur (1).

4. Tamis de radiateur (1) selon une des revendications 2 ou 3, **caractérisé en ce que** les portions d'extrémité (29) des canaux d'aspiration (6) forment, à leur surface périphérique extérieure, un raccord individuel en forme de bride (31) qui est positionnable en face d'une portion de raccord de conformation correspondante (30) du carter (8).

5. Tamis de radiateur (1) selon une des revendications précédentes, **caractérisé en ce que** les canaux d'aspiration (6) sont conçus intérieurement avec une surface latérale lisse (27) et présentent un tracé exempt de coudes ou d'arêtes vives.

6. Tamis de radiateur (1) selon une des revendications précédentes, **caractérisé en ce que** les bras d'aspiration (5a, 5b) sont montés respectivement à pivotement autour d'un axe (19), orienté verticalement par rapport à la surface, d'un point d'appui fixe (20).

7. Tamis de radiateur (1) selon la revendication 6, **caractérisé en ce que** les points d'appui (20) sont disposés à l'intérieur du tamis de radiateur (1), en particulier dans l'élément de bâti (3) ou la surface (4,).

8. Tamis de radiateur (1) selon une des revendications 6 ou 7, **caractérisé en ce que** les zones de sortie cylindriques (13b) sont disposées sensiblement coaxialement à l'axe (19).

9. Tamis de radiateur (1) selon une des revendications précédentes, **caractérisé en ce que** les canaux d'aspiration (6) sont fixés à l'élément de bâti (3).

10. Machine de récolte automotrice (50), en particulier moissonneuse-batteuse ou ensileuse, comprenant un moteur à combustion interne (51), au moteur à combustion interne (51) étant associé un dispositif de refroidissement (51) avec un tamis de radiateur (1) qui est associé selon une des revendications précédentes.

11. Machine de récolte automotrice (50) selon la revendication 10, **caractérisée en ce que** la surface (4) du tamis de radiateur (1) et le dispositif de nettoyage (2) sont disposés sur un élément de bâti commun (3) qui est disposé à pivotement sur la machine de récolte (50) en face du dispositif de refroidissement (52).

12. Machine de récolte automotrice (50) selon la revendication 10 ou 11, **caractérisée en ce que** le carter (8) qui reçoit le ventilateur aspirant (7) est disposé fixe sur la machine de récolte (50) au-dessous de l'élément de bâti pivotant (3) du tamis de radiateur (1).

13. Machine de récolte automotrice (50) selon une des revendications 10 à 12, **caractérisée en ce qu'**une solution de continuité est conçue entre les portions d'extrémité (29) des canaux d'aspiration (6) et la portion de raccord (30) sur le carter (8) .
